# EUROPEAN PATENT APPLICATION

(11) **EP 4 850 938 A1**
(43) Date of publication of application: **09.12.2026**
(21) Application number: 25761095.6
(22) Date of filing: 28.02.2025
(51) Int. Cl.: B60J 1/00, B60S 1/02, B32B 33/00, B32B 3/08, B32B 17/10

(54) **VEHICLE WINDOW GLASS AND VEHICLE**

(30) Priority: 01.03.2024 CN 202410236835
(71) Applicant: Fuyao Glass Industry Group Co., Ltd., Fuqing, Fujian 350300 (CN)
(72) Inventor: SHANG, Guicai, Fuzhou, Fujian 350300 (CN); CHEN, Xinghao, Fuzhou, Fujian 350300 (CN)
(74) Representative: Mewburn Ellis LLP
(86) International application number: PCT/CN2025/079694
(87) International publication number: WO 2025/180463

(57) **Abstract**

A vehicle window glass (0) and a vehicle (3) are provided. The vehicle window glass (0) includes a laminated glass (1) and an anti-reflection layer (2). The laminated glass (1) is provided with a heating region (11) and an information acquisition region (12), and the information acquisition region (12) is located inside the heating region (11). The laminated glass (1) has an outer surface (101) and an inner surface (102). The anti-reflection layer (2) is disposed on the inner surface (102) of the laminated glass (1). In a thickness direction of the laminated glass (1), a projection of the anti-reflection layer (2) on the inner surface (102) completely covers the information acquisition region (12). The heating region (11) includes multiple heating wires (13). The multiple heating wires (13) are disposed between the inner surface (102) and the outer surface (101) of the laminated glass (1), and the multiple heating wires (13) are located between two ends of the laminated glass (1) and extend in a longitudinal direction of the laminated glass (1). A diameter of the heating wires (13) ranges from 0.021mm to 0.03mm, and a spacing between two adjacent heating wires (13) ranges from 2.1mm to 3.5mm.

## Description

This application claims priority to Chinese Patent Application No. 202410236835.0, filed March 1, 2024, and entitled "VEHICLE WINDOW GLASS AND VEHICLE", the entire disclosure of which is incorporated herein by reference.

### TECHNICAL FIELD

The present disclosure relates to the field of glass technology, in particular, to a vehicle window glass and a vehicle.

### BACKGROUND

Laser radar, also known as a light detection and ranging (LiDAR), is a sensor based on non-contact laser ranging technology, consisting of three major parts: a transmitting system, a receiving system, and a control system. Currently, mass-produced vehicle models available on the market mostly adopt a mechanical LiDAR. The mechanical LiDAR is externally mounted on positions such as vehicle roof, headlights, front grille, and vehicle front roof sheet metal. However, the external layout of LiDAR has disadvantages such as large volume and heavy weight, and susceptibility to rain, snow, gravel, and wind.

Therefore, in the related art, a built-in LiDAR layout (i.e., disposing the LiDAR inside a front windshield) is mostly adopted. A solid-state LiDAR can achieve a significant reduction in size and weight, and is not susceptible to rain, snow, gravel and wind. However, since the solid-state LiDAR is disposed inside the front windshield, the front windshield may impose certain blocking effects on LiDAR signals. In addition, frost and fog may accumulate on the front windshield occasionally. To eliminate frost and fog on the front windshield, a layer of heating wires is usually embedded in the front windshield. The heating wires are made of metal materials, typically being tungsten wires, and such metal heating wires may block or even shield the LiDAR signals to a certain extent.

### SUMMARY

In view of this, the disclosure provides a vehicle window glass and a vehicle, which can realize defrosting and defogging through heating while not causing significant obstruction to LiDAR signals.

The disclosure provides a vehicle window glass, including a laminated glass and an anti-reflection layer. The laminated glass is provided with a heating region and an information acquisition region. The information acquisition region is located inside the heating region. The laminated glass has an inner surface and an outer surface. The anti-reflection layer is disposed on the inner surface of the laminated glass. In a thickness direction of the laminated glass, a projection of the anti-reflection layer on the inner surface completely covers the information acquisition region. The heating region includes multiple heating wires. The multiple heating wires are disposed between the inner surface and the outer surface of the laminated glass, and the multiple heating wires are located between two ends of the laminated glass and extend in a longitudinal direction of the laminated glass. A diameter of each of the multiple heating wires ranges from 0.021mm to 0.03mm, and a spacing between each two adjacent heating wires ranges from 2.1mm to 3.5mm.

Since the information acquisition region is located inside the heating region, the information acquisition region can be heated for defrosting and defogging, thereby preventing frost and fog in the information acquisition region from interfering with the transmission and reception of laser optical signals. Since the diameter of the heating wire ranges from 0.021mm to 0.03mm, and the spacing between each two adjacent heating wires ranges from 2.1mm to 3.5mm, the diameter of the heating wire and the spacing between the heating wires are within a reasonable range. As such, this configuration avoids poor defrosting and defogging effect that would otherwise arise from an excessively small diameter of the heating wire or an excessively large spacing between the heating wires, and also prevents significant obstruction to LiDAR signals that would otherwise be caused by an excessively large diameter of the heating wire or an excessively small spacing between the heating wires. Therefore, the heating wire can achieve a satisfactory defrosting and defogging effect, while causing no significant obstruction to LiDAR signals.

Further, the laminated glass includes an outer glass sheet, an interlayer, and an inner glass sheet that are stacked. The interlayer is sandwiched between the outer glass sheet and the inner glass sheet. A side of the outer glass sheet facing away from the interlayer is the outer surface, and a side of the inner glass sheet facing away from the interlayer is the inner surface.

Further, the multiple heating wires are disposed between the outer glass sheet and the interlayer; and/or the multiple heating wires are disposed between the interlayer and the inner glass sheet.

Further, a heating power of the multiple heating wires ranges from 10W to 14W.

If the heating power of the heating wires is excessively low, a satisfactory defrosting and defogging effect may not be achieved. If the heating power of the heating wires is excessively high, the excessively high heating power will cause degradation of the transmitted wavefront, thereby affecting normal transmission of LiDAR signals. By setting the heating power of the heating wires to be in the range of 10W to 14W, both satisfactory defrosting and defogging effect and normal transmission of LiDAR signals can be ensured.

Further, a heating temperature of the multiple heating wires ranges from 40°C to 65°C.

If the heating temperature of the heating wires is excessively low, a satisfactory defrosting and defogging effect may not be achieved. If the heating temperature of the heating wires is excessively high, the excessively high heating temperature will cause degradation of the transmitted wavefront, thereby affecting normal transmission of LiDAR signals. By setting the heating temperature of the heating wires to be in the range of 40°C to 65°C, both satisfactory defrosting and defogging effect and normal transmission of LiDAR signals can be ensured.

Further, a transmittance of the laminated glass for light having a wavelength in a range of 850nm to 1550nm incident at an incident angle in a range of 60° to 70° is denoted as T1. A transmittance of the information acquisition region for light having a wavelength in a range of 850nm to 1550nm incident at an incident angle in a range of 60° to 70° is denoted as T2, where T2 - T1 ≥ 4%.

The anti-reflection layer 2 is disposed on the inner surface 102 of the laminated glass 1, which can improve the transmittance of the vehicle window glass 0 for light having a wavelength in a range of 850nm to 1550nm incident at an incident angle in a range of 60° to 70°, thereby meeting the requirements of LiDAR for automotive glass.

Further, the anti-reflection layer includes multiple high-refractive-index layers and multiple low-refractive-index layers that are stacked. One low-refractive-index layer is stacked between every two adjacent high-refractive-index layers, and one high-refractive-index layer is stacked between every two adjacent low-refractive-index layers. A layer in direct contact with the inner surface is a high-refractive-index layer.

By providing multiple high-refractive-index layers and multiple low-refractive-index layers stacked alternately in sequence, the laser reflectance can be effectively reduced, thereby increasing the laser transmittance.

Further, for every adjacent high-refractive-index layer and low-refractive-index layer, a difference between a refractive index of the high-refractive-index layer and a refractive index of the low-refractive-index layer is greater than or equal to 0.3.

Further, a refractive index of each of the multiple high-refractive-index layers ranges from 1.9 to 3.5.

Further, a refractive index of each of the multiple low-refractive-index layers ranges from 1.4 to 1.9.

Further, a material of the high-refractive-index layers includes one or a combination of two or more of Si, NbOx (niobium oxide), SiNx (silicon nitride), ZrOx (zirconium oxide), TiOx (titanium oxide), TiNx (titanium nitride), MoOx (molybdenum oxide), TaOx (tantalum oxide), and HfOx (hafnium oxide).

Further, a material of the low-refractive-index layers includes one or a combination of two or more of SiOx (silicon oxide), MgFx (magnesium fluoride), AlOx (aluminum oxide), WOx (tungsten oxide), YFx (yttrium fluoride), and BaFx (barium fluoride).

Further, at least one of the outer glass sheet or the inner glass sheet has a transmittance of at least 91% in a wavelength range of 850nm to 1550nm.

Further, the vehicle window glass has a transmittance greater than or equal to 70% for visible light in a wavelength range of 380nm to 780nm.

Further, a material of the interlayer is selected from at least one of polyvinyl butyral (PVB), polyolefin (POE), ethylene-vinyl acetate copolymer (EVA), or polyurethane (PU).

Further, the multiple heating wires are tungsten wires or copper wires.

Further, the multiple heating wires are printed silver paste wires.

Further, a probability of detection (POD) of the information acquisition region of the vehicle window glass ranges from 90% to 92.9%.

The POD of the information acquisition region of the vehicle window glass of the disclosure ranges from 90% to 92.9%, which is greater than or equal to 90%, thereby meeting the ranging capability requirement under actual vehicle conditions.

The disclosure also provides a vehicle, including a vehicle body, an optical sensor assembly, and the vehicle window glass as described above. An accommodation space is defined in the vehicle body, the vehicle window glass is mounted on the vehicle body, and the optical sensor assembly is disposed in the accommodation space and corresponds to the information acquisition region.

Further, an installation angle *θ* of the vehicle window glass ranges from 20° to 30°, the optical sensor assembly includes a LiDAR, and a POD of the LiDAR is greater than or equal to 90%.

Further, light transmitted by the LiDAR has a wavelength of 905nm, 940nm, or 1550nm.

The vehicle of the disclosure includes the vehicle window glass as described above. In the vehicle window glass, the diameter of the heating wire ranges from 0.021mm to 0.03mm, and the spacing between each two adjacent heating wires ranges from 2.1mm to 3.5mm. The diameter of the heating wire and the spacing between the heating wires are within a reasonable range. As such, this configuration avoids poor defrosting and defogging effect that would otherwise arise from an excessively small diameter of the heating wire or an excessively large spacing between the heating wires, and also prevents significant obstruction to LiDAR signals that would otherwise be caused by an excessively large diameter of the heating wire or an excessively small spacing between the heating wires. Therefore, in the vehicle of the disclosure, the heating wire can achieve a satisfactory defrosting and defogging effect, while causing no significant obstruction to LiDAR signals.

### BRIEF DESCRIPTION OF THE DRAWINGS

In order to more clearly illustrate the technical solutions in the embodiments of the disclosure, the following introduces the drawings required for use in the embodiments of the disclosure.
FIG. 1 is a schematic top view of a vehicle window glass of the disclosure.
FIG. 2 is a schematic cross-sectional view of the vehicle window glass of the disclosure.
FIG. 3 is another schematic cross-sectional view of the vehicle window glass of the disclosure.
FIG. 4 is a schematic top view of heating wires of the vehicle window glass of the disclosure.
FIG. 5 is a schematic cross-sectional view of an anti-reflection layer of the vehicle window glass of the disclosure.
FIG. 6 is a schematic structural view of the vehicle of the disclosure.

### Reference numerals:

vehicle window glass 0, laminated glass 1, outer surface 101, inner surface 102, heating region 11, information acquisition region 12, heating wire 13, outer glass sheet 14, inner glass sheet 15, interlayer 16, anti-reflection layer 2, high-refractive-index layer 21, low-refractive-index layer 22, vehicle 3, vehicle body 31, accommodation space 311, optical sensor assembly 32.

### DETAILED DESCRIPTION

The following are preferred embodiments of the disclosure. It may be noted that, for those of ordinary skill in the art, several improvements and modifications can be made without departing from the principle of the disclosure, and these improvements and modifications are also considered to be within the protection scope of the disclosure.

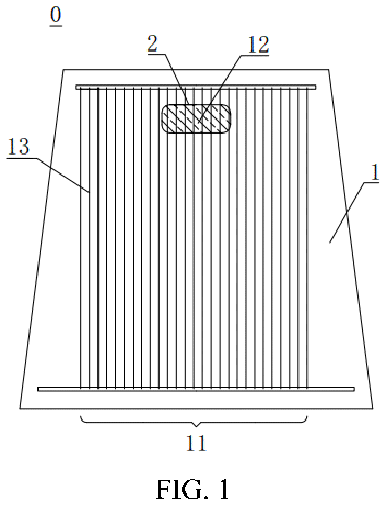

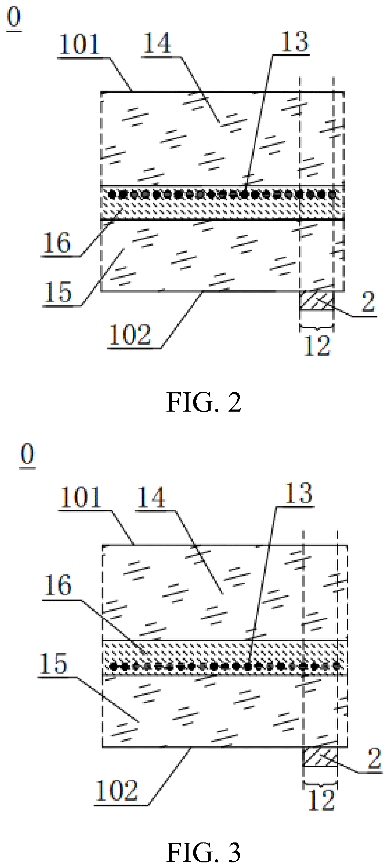

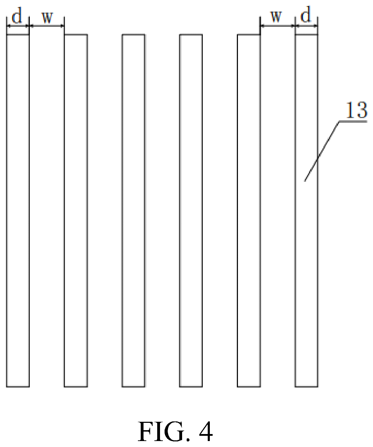

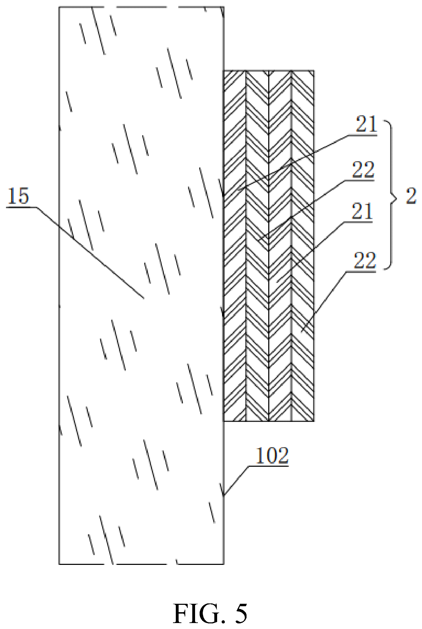

FIG. 1 is a schematic top view of a vehicle window glass of the disclosure. FIG. 2 is a schematic cross-sectional view of the vehicle window glass of the disclosure. FIG. 3 is another schematic cross-sectional view of the vehicle window glass of the disclosure. FIG. 4 is a schematic top view of the heating wires of the vehicle window glass of the disclosure. FIG. 5 is a schematic cross-sectional view of the anti-reflection layer of the vehicle window glass of the disclosure. As illustrated in FIGS. 1 to 5, the disclosure provides a vehicle window glass 0. The vehicle window glass 0 includes a laminated glass 1 and an anti-reflection layer 2. The laminated glass 1 is provided with a heating region 11 and an information acquisition region 12, and the information acquisition region 12 is located inside the heating region 11. The laminated glass 1 has an outer surface 101 and an inner surface 102. The anti-reflection layer 2 is disposed on the inner surface 102 of the laminated glass 1. In a thickness direction of the laminated glass 1, a projection of the anti-reflection layer 2 on the inner surface 102 completely covers the information acquisition region 12. The heating region 11 includes multiple heating wires 13. The multiple heating wires 13 are disposed between the inner surface 102 and the outer surface 101 of the laminated glass 1, and the multiple heating wires 13 are located between two ends of the laminated glass 1 and extend in a longitudinal direction of the laminated glass 1. A diameter of each of the multiple heating wires 13 ranges from 0.021mm to 0.03mm, and a spacing between each two adjacent heating wires 13 ranges from 2.1mm to 3.5mm. In the disclosure, the information acquisition region 12 is a signal transmission region of an optical sensor on the laminated glass 1.

As illustrated in FIG. 4, in the disclosure, the diameter of the heating wire 13 is denoted as *d,* where *d* ranges from 0.021mm to 0.03mm. The spacing between each two adjacent heating wires 13 is denoted as w, where w ranges from 2.1mm to 3.5mm.

It may be noted that, the optical sensor in the disclosure includes but is not limited to a LiDAR, a near-infrared camera, etc. The information acquisition region 12 is not limited in shape, and may have a shape such as a square shape, a circular shape, or the like.

As illustrated in FIGS. 1 to 5, the diameter of the heating wire 13 ranges from 0.021mm to 0.03mm, preferably from 0.023mm to 0.027mm. The diameter of the heating wire 13 may specifically be 0.021mm, 0.022mm, 0.023mm, 0.024mm, 0.025mm, 0.026mm, 0.027mm, 0.028mm, 0.029mm, or 0.03mm. The spacing between each two adjacent heating wires 13 ranges from 2.1mm to 3.5mm, preferably from 2.5mm to 3.1mm. The spacing between each two adjacent heating wires 13 may specifically be 2.1mm, 2.3mm, 2.5mm, 2.7mm, 2.9mm, 3.1mm, 3.3mm, or 3.5mm.

In the embodiment, since the diameter of the heating wire 13 ranges from 0.021mm to 0.03mm, and the spacing between each two adjacent heating wires 13 ranges from 2.1mm to 3.5mm, the diameter of the heating wire 13 and the spacing between the heating wires 13 are within a reasonable range. As such, this configuration avoids poor defrosting and defogging effect on the heating region 11 of the vehicle window glass 0 that would otherwise arise from an excessively small diameter of the heating wire 13 or an excessively large spacing between the heating wires 13, and also prevents significant obstruction to signals of an optical sensor (such as LiDAR) that would otherwise be caused by an excessively large diameter of the heating wire 13 or an excessively small spacing between the heating wires 13. Therefore, the heating wires 13 can achieve a satisfactory defrosting and defogging effect on the heating region 11 of the vehicle window glass 0, while causing no significant obstruction to optical signals of the LiDAR.

In the embodiment, the information acquisition region 12 is located inside the heating region 11, so that the heating wire 13 can defog and defrost the information acquisition region 12, preventing frost and fog on the information acquisition region 12 from interfering with optical signal transmission of the LiDAR. In this way, the heating wire 13 can not only heat the information acquisition region 12 to achieve defrosting and defogging, but also avoid causing significant obstruction to optical signal transmission of the LiDAR.

In the embodiment, the anti-reflection layer 2 is disposed on the inner surface 102 of the laminated glass 1, so that the reflection of light in the wavelength range of 850nm to 1550nm by the vehicle window glass 0 can be reduced, thereby improving the transmittance of the information acquisition region 12 on the laminated glass 1 for light in the wavelength range of 850nm to 1550nm. It may be noted that, the case that the projection of the anti-reflection layer 2 on the inner surface 102 completely covers the information acquisition region 12 may mean that an orthographic projection of the anti-reflection layer 2 on the inner surface 102 of the laminated glass 1 coincides with the information acquisition region 12, or that an area of the orthographic projection of the anti-reflection layer 2 on the inner surface 102 of the laminated glass 1 is greater than the information acquisition region 12. It may be understood that, in the above vehicle window glass 0, the shape of the anti-reflection layer 2 may be adjusted according to actual needs, for example, may have a trapezoidal shape, a square shape, or the like.

In the embodiment, the laminated glass 1 includes an outer glass sheet 14, an interlayer 16, and an inner glass sheet 15 that are stacked. The interlayer 16 is sandwiched between the outer glass sheet 14 and the inner glass sheet 15. The inner glass sheet 15 is closer to a vehicle interior than the outer glass sheet 14. A side of the outer glass sheet 14 facing away from the interlayer 16 is the outer surface 101, and a side of the inner glass sheet 15 facing away from the interlayer 16 is the inner surface 102.

It may be noted that, the information acquisition region 12 is a part of the laminated glass 1 in the vehicle window glass 0. That is, the information acquisition region 12 is arranged in a part of the outer glass sheet 14, the interlayer 16, and the inner glass sheet 15 of the laminated glass 1, and is used for optical signals transmitted and received by the LiDAR to pass through. The area of the information acquisition region 12 only needs to be sufficient for the passage of the optical signals of the LiDAR.

It may be noted that, the laminated glass 1 may be of a flat plate shape, or the laminated glass 1 may have a curved shape or an arc shape. The shape of the laminated glass 1 is not limited to the shapes described above, and may be any shape that meets usage requirements of the vehicle window glass 0. The disclosure imposes no strict restriction on the shape of the laminated glass 1.

It may be noted that, the vehicle window glass 0 may be used as a front windshield of a vehicle.

In the embodiment, at least one of the outer glass sheet 14 or the inner glass sheet 15 has a transmittance of at least 91% in a wavelength range of 850nm to 1550nm, and ultra-clear float glass may be used. In an embodiment, both the outer glass sheet 14 and the inner glass sheet 15 are ultra-clear float glass. The use of ultra-clear float glass is beneficial for improving the transmittance of the vehicle window glass 0 to infrared light having a wavelength of 905nm, 940nm, or 1550nm transmitted and received by the LiDAR. In addition, the thickness of the outer glass sheet 14 is greater than or equal to the thickness of the inner glass sheet 15. The reason is that the outer glass sheet 14 requires relatively highly durability and impact resistance against external obstacles. Therefore, the outer glass sheet 14 is preferably relatively thick. Moreover, in order to reduce absorption of infrared light by the inner glass sheet 15, the inner glass sheet 15 is relatively thin and may be tempered to improve its strength to meet strength requirements of the glass. In this way, while sufficient strength is ensured, the absorption of infrared rays by the inner glass sheet 15 can be minimized, and meanwhile, lightweight requirements can be satisfied as much as possible by reducing the total thickness of the inner and outer glass sheets.

In the embodiment, the interlayer 16 is a thermoplastic polymer layer for bonding the outer glass sheet 14 and the inner glass sheet 15 to form a laminated structure. The material of the interlayer 16 may be selected from polyvinyl butyral (PVB), polyolefin (POE), ethylene-vinyl acetate copolymer (EVA), polyurethane (PU), etc., and is preferably PVB. The use of PVB can effectively suppress the propagation of noise, enabling the laminated glass 1 to achieve a sound insulation effect. In addition, the interlayer 16 may be a single-layer structure or a multi-layer structure. The multi-layer structure may be, for example, a double-layer structure, a three-layer structure, a four-layer structure, a five-layer structure, etc.

As illustrated in FIG. 2 and FIG. 3, the multiple heating wires 13 are disposed between the outer glass sheet 14 and the interlayer 16; and/or the multiple heating wires 13 are disposed between the interlayer 16 and the inner glass sheet 15.

In the embodiment, the heating wire 13 is wire-shaped, and the cross-section of the heating wire 13 may be circular, rectangular, triangular, etc. As illustrated in FIG. 2, the heating wire 13 may be disposed only between the outer glass sheet 14 and the interlayer 16, where multiple heating wires 13 are arranged, and the multiple heating wires 13 are spaced apart by a certain gap and are parallel to each other. As illustrated in FIG. 3, the heating wire 13 may be disposed only between the interlayer 16 and the inner glass sheet 15, where multiple heating wires 13 are arranged, and the multiple heating wires 13 are spaced apart by a certain gap and are parallel to each other. In addition, the multiple heating wires may be disposed both between the outer glass sheet 14 and the interlayer 16 and between the interlayer 16 and the inner glass sheet 15 (not illustrated in the drawings), where the multiple heating wires 13 are arranged, and the multiple heating wires 13 are spaced apart by a certain gap and are parallel to each other. In the embodiment, the multiple heating wires are embedded in the interlayer 16, where the multiple heating wires 13 are arranged, and the multiple heating wires 13 are spaced apart by a certain gap and are parallel to each other.

In the embodiment, the heating wires 13 may be metal wires such as tungsten wires and copper wires. However, it may be understood that, the heating wires 13 may be printed silver paste wires. In addition, although the heating wires 13 are illustrated as straight lines in FIG. 1 and FIG. 4, it may be understood that the heating wires 13 may be designed to have a non-linear shape according to actual needs, such as sinusoidal curves, same-direction folded curves, etc.

In the embodiment, the heating power of the heating wires 13 ranges from 10W to 14W, and may specifically be 10W, 11W, 12W, 13W, or 14W. If the heating power of the heating wires 13 is excessively low, a satisfactory defrosting and defogging effect may not be achieved. If the heating power of the heating wires 13 is excessively high, the excessively high heating power will cause the heating wires 13 to generate a relatively high temperature, thereby generating infrared radiant energy having a certain wavelength, which may interfere with optical signals of the LiDAR, and further affect normal transmission of LiDAR signals. By setting the heating power of the heating wires 13 to be in the range of 10W to 14W, both satisfactory defrosting and defogging effect and normal transmission of LiDAR signals can be ensured.

In the embodiment, the heating temperature of the heating wires 13 ranges from 40°C to 65°C, and may specifically be 40°C, 45°C, 50°C, 55°C, 60°C, or 65°C. If the heating temperature of the heating wires 13 is excessively low, a satisfactory defrosting and defogging effect may not be achieved. If the heating temperature of the heating wires 13 is excessively high, the excessively high heating temperature will cause the heating wires 13 to generate infrared radiant energy having a certain wavelength, which may interfere with optical signals of the LiDAR, and further affect normal transmission of LiDAR signals. By setting the heating temperature of the heating wires 13 to be in the range of 40°C to 65°C, both satisfactory defrosting and defogging effect and normal transmission of LiDAR signals can be ensured.

Reference is made to FIG. 5 again. The anti-reflection layer 2 can increase the transmittance of optical signals of the LiDAR by reducing the reflectance of light. The anti-reflection layer 2 may be directly deposited on the inner surface 102 of the laminated glass 1 by magnetron sputtering. A continuous vertical coating machine, a cylindrical vertical coating machine, or a horizontal coating machine may be used. Specifically, a continuous vertical coating machine is adopted. The anti-reflection layer 2 may be formed by coating or other methods, and the anti-reflection layer 2 may be attached to the inner surface 102 of the laminated glass 1 via a substrate. Specifically, the anti-reflection layer 2 may include multiple high-refractive-index layers 21 and multiple low-refractive-index layers 22 that are stacked. The multiple high-refractive-index layers 21 and the multiple low-refractive-index layers 22 are stacked alternately in sequence. The refractive index of the high-refractive-index layers 21 is greater than the refractive index of the low-refractive-index layers 22. The layer in the anti-reflection layer 2 close to the inner glass sheet 15 is a high-refractive-index layer 21. That is, one low-refractive-index layer 22 is stacked between every two adjacent high-refractive-index layers 21, and one high-refractive-index layer 21 is stacked between every two adjacent low-refractive-index layers 22. The layer in the anti-reflection layer 2 that is in contact with the inner glass sheet 15 is a high-refractive-index layer 21. By providing multiple high-refractive-index layers 21 and multiple low-refractive-index layers 22 that are alternately stacked in sequence, light is reflected at contact interfaces between the multiple high-refractive-index layers 21 and the multiple low-refractive-index layers 22, and multiple reflections realize surface anti-reflection and extinction, thereby increasing the transmittance of light.

In the embodiment, a transmittance of the laminated glass 1 (without the anti-reflection layer 2) for light having a wavelength in a range of 850nm to 1550nm incident at an incident angle in a range of 60° to 70° is denoted as T1, and a transmittance of the information acquisition region 12 for light having a wavelength in a range of 850nm to 1550nm incident at an incident angle in a range of 60° to 70° is denoted as *T*2, where T2 - T1 ≥ 4%. Further, T2 - T1 ≥ 5%; still further, T2 - T1 ≥ 6%, or T2 - T1 ≥ 7%. In the disclosure, the anti-reflection layer 2 is disposed on the inner surface 102 of the laminated glass 1, so that the transmittance of the vehicle window glass 0 for light having a wavelength in a range of 850nm to 1550nm incident at an incident angle in a range of 60° to 70° may be improved, thereby meeting the requirements of LiDAR for automotive glass.

In the embodiment, for every adjacent high-refractive-index layer 21 and low-refractive-index layer 22, a difference between a refractive index of a high-refractive-index layer 21 and a refractive index of a low-refractive-index layer 22 is greater than or equal to 0.3, further may be greater than or equal to 0.4, greater than or equal to 0.5, greater than or equal to 0.6, greater than or equal to 0.7, greater than or equal to 0.75, greater than or equal to 0.8, greater than or equal to 0.9, etc.

In the embodiment, the refractive index of the high-refractive-index layer 21 may range from 1.9 to 3.5, and the refractive index of the low-refractive-index layer 22 may range from 1.4 to 1.9. Specifically, the material of the high-refractive-index layers 21 may include one or a combination of two or more of Si, NbOₓ (niobium oxide), SiNₓ (silicon nitride), ZrOₓ (zirconium oxide), TiOₓ (titanium oxide), TiNₓ (titanium nitride), MoOₓ (molybdenum oxide), TaOₓ (tantalum oxide), and HfOₓ (hafnium oxide). Specifically, the material of the low-refractive-index layers 22 includes one or a combination of two or more of SiOₓ (silicon oxide), MgFₓ (magnesium fluoride), AlOₓ (aluminum oxide), WOₓ (tungsten oxide), YFₓ (yttrium fluoride), and BaFₓ (barium fluoride).

In the embodiment, the materials of the high-refractive-index layers 21 in different stacked layer groups may be the same or different. If the same material is selected, it is beneficial to simplifying the production process and optimizing production time for each product. Similarly, the materials of the low-refractive-index layers 22 in different stacked layer groups may be the same or different. If the same material is selected, it is beneficial to simplifying the production process and optimizing production time for each product.

In the embodiment, the vehicle window glass 0 has a transmittance greater than or equal to 70% for visible light in a wavelength range of 380nm to 780nm, so that the light transmittance of the vehicle window glass 0 can meet normal driving requirements.

In the embodiment, the evaluation method for the defrosting and defogging capability of the heating wire 13 in the heating region 11 for the surface of the vehicle window glass 0 is as follows: for the information acquisition region 12 of the vehicle window glass 0 that is fully covered with frost, after the start of the heating test, frost and fog shall be removed from at least 80% of the area of the information acquisition region 12 within 20 minutes; after the start of the heating test, frost and fog shall be removed from at least 95% of the area of the information acquisition region 12 within 30 minutes; and after the start of the heating test, 100% of the area of the information acquisition region 12 shall be restored to transparency within 40 minutes.

The following table sets forth the experimental results of the probability of detection (POD) and the defrosting and defogging effect of the vehicle window glass 0 provided by the disclosure under different diameters of the heating wire, spacings between the heating wires, heating temperatures, and with or without the anti-reflection layer. The POD is used to characterize the detection capability of LiDAR signals passing through the vehicle window glass 0. The POD is a measure of the possibility that an optical sensor assembly detects a target, and serves as a quantitative evaluation indicator for the optical sensor assembly detecting the target. The POD is related to factors such as the sensitivity of the optical sensor assembly, detection distance, detection time, atmospheric transparency, lighting conditions, and target characteristics. The ranging capability requirements of the vehicle under actual service conditions can be met only when POD is greater than or equal to 90%.

**Table 1**

| | | *d*(mm) | *w*(mm) | Anti-reflection layer | Heating temperature range | POD(%) | Defrosting and defogging effect |
|---|---|---|---|---|---|---|---|
| | 1 | 0.027 | 2.1 | WITH | 55°C-59°C | 90.1 | OK |
| | 2 | 0.027 | 2.5 | WITH | 50°C-54°C | 91.4 | OK |
| Embodiment | 3 | 0.027 | 3.0 | WITH | 45°C-49°C | 92.1 | OK |
| | 4 | 0.027 | 3.5 | WITH | 42°C-46°C | 92.9 | OK |
| | 5 | 0.025 | 2.1 | WITH | 53°C-57°C | 90.7 | OK |
| | 6 | 0.025 | 2.5 | WITH | 48°C-52°C | 91.8 | OK |
| | 7 | 0.021 | 2.1 | WITH | 42°C-47°C | 90.9 | OK |
| | 8 | 0.030 | 2.1 | WITH | 58°C-62°C | 90.0 | OK |
| | 9 | 0.021 | 2.5 | WITH | 40°C-45°C | 92.0 | OK |
| | 10 | 0.030 | 2.5 | WITH | 54°C-59°C | 90.4 | OK |
| Comparative example | 1 | 0.027 | 2.0 | WITH | 56°C-63°C | 89.8 | OK |
| | 2 | 0.027 | 3.6 | WITH | 36°C-39°C | 93.1 | NG |
| | 3 | 0.020 | 2.1 | WITH | 38°C-39°C | 91.1 | NG |
| | 4 | 0.031 | 2.1 | WITH | 60°C-64°C | 89.3 | OK |
| | 5 | 0.020 | 2.5 | WITH | 38°C-39°C | 92.3 | NG |
| | 6 | 0.031 | 2.5 | WITH | 56°C-60°C | 89.8 | OK |
| | 7 | 0.027 | 2.1 | WITHOUT | 55°C-59°C | 86.1 | OK |

As can be seen from the above table, in embodiments 1 to 10, the diameter of the heating wire 13 ranges from 0.021mm to 0.03mm, the spacing between each two adjacent heating wires 13 ranges from 2.1mm to 3.5mm, and the anti-reflection layer 2 is present. In this case, the POD of the vehicle window glass 0 is all above 90%, meeting the ranging requirements of the vehicle. In embodiments 1 to 10, a smaller diameter of the heating wire 13 corresponds to a greater POD of the vehicle window glass 0. For example, embodiments 7 and 8 adopt the same spacing between the heating wires 13, which is 2.1mm. When the diameter of the heating wire increases from 0.021mm to 0.03mm, the POD of the vehicle window glass 0 decreases from 90.9% to 90.0%. In embodiments 1 to 10, a greater spacing between each two adjacent heating wires 13 corresponds to a greater POD of the vehicle window glass 0. For example, embodiments 1 to 4 adopt the same diameter of the heating wire 13, which is 0.027mm. When the spacing between the heating wires 13 gradually increases from 2.1mm to 3.5mm, the POD of the vehicle window glass 0 gradually increases from 90.1% to 92.9%. Moreover, it can be seen from embodiments 1 to 10 that, the POD of the vehicle window glass 0 ranges from 90% to 92.9%. In addition, in embodiments 1 to 10, when the heating temperature of the heating wires 13 ranges from 40°C to 65°C, a satisfactory defrosting and defogging effect of the vehicle window glass 0 can be achieved.

In addition, as can be seen from the above table, in comparative example 7, the POD of the vehicle window glass 0 without the anti-reflection layer 2 is below 90%, which cannot meet the ranging requirements of the vehicle. In comparative examples 3 and 5, the diameter of the heating wire 13 is 0.020mm, the spacing between each two adjacent heating wires 13 ranges from 2.1mm to 3.5mm, and the anti-reflection layer 2 is present. In this case, the POD of the vehicle window glass 0 is above 90%, but the defrosting and defogging effect of the vehicle window glass 0 cannot meet the requirements. In comparative examples 4 and 6, the diameter of the heating wire 13 is 0.031mm, the spacing between each two adjacent heating wires 13 ranges from 2.1mm to 3.5mm, and the anti-reflection layer 2 is present. In this case, the defrosting and defogging effect of the vehicle window glass 0 meets the requirements, but the POD of the vehicle window glass 0 is below 90%, which cannot meet the ranging requirements of the vehicle. In comparative example 1, the spacing between the heating wires 13 is 2.0mm, the diameter of the heating wire 13 is 0.027mm, and the anti-reflection layer 2 is present. In this case, the defrosting and defogging effect of the vehicle window glass 0 meets the requirements, but the POD of the vehicle window glass 0 is below 90%, which cannot meet the ranging requirements of the vehicle. In comparative example 2, the spacing between the heating wires 13 is 3.6mm, the diameter of the heating wire 13 is 0.027mm, and the anti-reflection layer 2 is present. In this case, the POD of the vehicle window glass 0 is above 90%, meeting the ranging requirements of the vehicle, but the defrosting and defogging effect of the vehicle window glass 0 cannot meet the requirements. In comparative examples 2, 3, and 5, when the heating temperature of the heating wires 13 is lower than 40°C, the defrosting and defogging effect of the vehicle window glass 0 cannot meet the requirements.

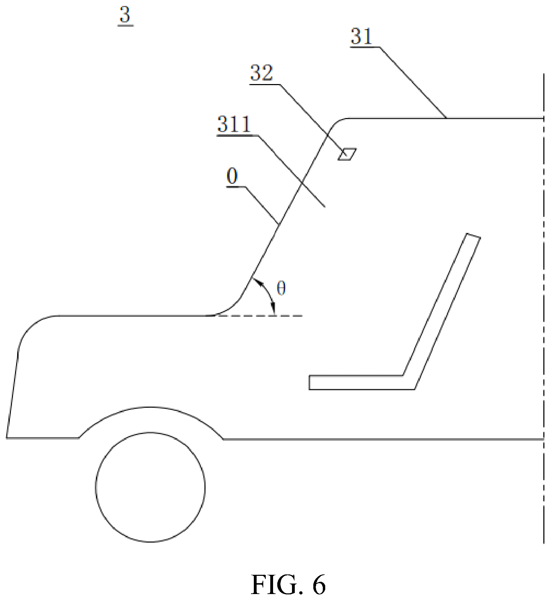

FIG. 6 is a schematic structural view of a vehicle according to an embodiment of the disclosure. As illustrated in FIG. 6, the disclosure further provides a vehicle 3, including a vehicle body 31, an optical sensor assembly 32, and the vehicle window glass 0 as described above. An accommodation space 311 is defined in the vehicle body 31. The vehicle window glass 0 constitutes a front windshield of the vehicle 3 and is mounted on the vehicle body 31. The optical sensor assembly 32 is disposed in the accommodation space 311 and corresponds to the information acquisition region 12 of the vehicle window glass 0. The installation angle *θ* of the vehicle window glass 0 is preferably 20° to 30°, and the wavelength of the light transmitted by the optical sensor assembly 32 is preferably 905nm, 940nm, or 1550nm, so that a satisfactory POD may be obtained by the vehicle window glass 0.

The optical sensor assembly 32 includes an optical sensor. The optical sensor includes a transmitting module, a receiving module, and a control module. The transmitting module is configured to transmit laser light. The receiving module is configured to receive echo laser light diffusely reflected back by a measured object. The control module is electrically connected to the transmitting module and the receiving module and is configured to control the laser light transmission of the transmitting module and the reception of the echo laser light of the receiving module. The optical sensor assembly 32 may adopt an integrated structure or a split structure. An integrated optical sensor assembly 32 may be mounted on the vehicle body 31. For a split optical sensor assembly 32, the transmitting module, the control module, and the receiving module may be separately disposed on the vehicle body 31. The optical sensor assembly 32 may further include a scanning module. The scanning module is configured to reflect the laser light transmitted by the transmitting module and reflect the echo laser light diffusely reflected back by the measured object back to the receiving module.

In the illustration of the disclosure, it may be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", etc., indicating orientations or positional relationships, are based on the orientations or positional relationships illustrated in the drawings, and are merely for the convenience of describing the disclosure and simplifying the illustration, rather than indicating or implying that the referred device or element must have a specific orientation, be constructed and operated in a specific orientation, and thus should not be construed as limiting the disclosure.

In addition, the terms "first" and "second" are used for descriptive purposes only, and cannot be understood as indicating or implying relative importance or implicitly indicating the number of the indicated technical features. Thus, a feature defined with "first" or "second" may explicitly or implicitly include one or more of that feature. In the illustration of the disclosure, "multiple" means two or more, unless otherwise explicitly and specifically defined. Furthermore, the terms "comprise" and "have" and any variations thereof are intended to cover non-exclusive inclusion.

In the disclosure, unless otherwise explicitly specified and limited, the terms "mounted", "connected", "linked", "fixed", etc. should be understood in a broad sense. For example, it may be a connection, or a detachable connection, or integrated together. It may be a mechanical connection or an electrical connection. It may be a direct connection, or an indirect connection through an intermediate medium, and it may be the internal communication between two elements or the interaction relationship between two elements. For those of ordinary skill in the art, the specific meanings of the above terms in the disclosure can be understood according to specific situations.

The content provided in the embodiments of the disclosure has been described in detail above, and the principle and embodiments of the disclosure have been set forth and explained. These illustrations are only used to help understand the method and core idea of the disclosure. However, the content of this specification should not be construed as limiting the disclosure. Those skilled in the art can make various changes and modifications to the disclosure without departing from the spirit and scope of the disclosure. These modifications and variations of the disclosure fall within the scope of the claims of the disclosure and their equivalents.

## Claims

1. A vehicle window glass, comprising a laminated glass and an anti-reflection layer, wherein the laminated glass is provided with a heating region and an information acquisition region, and the information acquisition region is located inside the heating region;
the laminated glass has an inner surface and an outer surface, the anti-reflection layer is disposed on the inner surface of the laminated glass, and in a thickness direction of the laminated glass, a projection of the anti-reflection layer on the inner surface completely covers the information acquisition region;
the heating region comprises a plurality of heating wires, wherein the plurality of heating wires are disposed between the inner surface and the outer surface of the laminated glass, and the plurality of heating wires are located between two ends of the laminated glass and extend in a longitudinal direction of the laminated glass; and
a diameter of each of the plurality of heating wires ranges from 0.021mm to 0.03mm, and a spacing between each two adjacent heating wires ranges from 2.1mm to 3.5mm.

2. The vehicle window glass according to claim 1, wherein the laminated glass comprises an outer glass sheet, an interlayer, and an inner glass sheet that are stacked, and the interlayer is sandwiched between the outer glass sheet and the inner glass sheet; and
a side of the outer glass sheet facing away from the interlayer is the outer surface, and a side of the inner glass sheet facing away from the interlayer is the inner surface.

3. The vehicle window glass according to claim 2, wherein the plurality of heating wires are disposed between the outer glass sheet and the interlayer; and/or
the plurality of heating wires are disposed between the interlayer and the inner glass sheet.

4. The vehicle window glass according to claim 1, wherein a heating power of the plurality of heating wires ranges from 10W to 14W.

5. The vehicle window glass according to claim 1, wherein a heating temperature of the plurality of heating wires ranges from 40°C to 65°C.

6. The vehicle window glass according to claim 1, wherein a transmittance of the laminated glass for light having a wavelength in a range of 850nm to 1550nm incident at an incident angle in a range of 60° to 70° is denoted as T1, and a transmittance of the information acquisition region for light having a wavelength in a range of 850nm to 1550nm incident at an incident angle in a range of 60° to 70° is denoted as *T*2, wherein *T*2 *- T*1 ≥ 4%.

7. The vehicle window glass according to claim 1, wherein the anti-reflection layer comprises a plurality of high-refractive-index layers and a plurality of low-refractive-index layers that are stacked, wherein one low-refractive-index layer is stacked between every two adjacent high-refractive-index layers, one high-refractive-index layer is stacked between every two adjacent low-refractive-index layers, and a layer in direct contact with the inner surface is a high-refractive-index layer.

8. The vehicle window glass according to claim 7, wherein for every adjacent high-refractive-index layer and low-refractive-index layer, a difference between a refractive index of the high-refractive-index layer and a refractive index of the low-refractive-index layer is greater than or equal to 0.3.

9. The vehicle window glass according to claim 7, wherein a refractive index of each of the plurality of high-refractive-index layers ranges from 1.9 to 3.5.

10. The vehicle window glass according to claim 7, wherein a refractive index of each of the plurality of low-refractive-index layers ranges from 1.4 to 1.9.

11. The vehicle window glass according to claim 7, wherein a material of the high-refractive-index layers comprises one or a combination of two or more of Si, NbOₓ (niobium oxide), SiNₓ (silicon nitride), ZrOₓ (zirconium oxide), TiOₓ (titanium oxide), TiNₓ (titanium nitride), MoOₓ (molybdenum oxide), TaOₓ (tantalum oxide), and HfOₓ (hafnium oxide).

12. The vehicle window glass according to claim 7, wherein a material of the low-refractive-index layers comprises one or a combination of two or more of SiOₓ (silicon oxide), MgFₓ (magnesium fluoride), AlOₓ (aluminum oxide), WOₓ (tungsten oxide), YFₓ (yttrium fluoride), and BaFₓ (barium fluoride).

13. The vehicle window glass according to claim 2, wherein at least one of the outer glass sheet or the inner glass sheet has a transmittance of at least 91% in a wavelength range of 850nm to 1550nm.

14. The vehicle window glass according to claim 1, wherein the vehicle window glass has a transmittance greater than or equal to 70% for visible light in a wavelength range of 380nm to 780nm.

15. The vehicle window glass according to claim 2, wherein a material of the interlayer is selected from at least one of polyvinyl butyral (PVB), polyolefin (POE), ethylene-vinyl acetate copolymer (EVA), or polyurethane (PU).

16. The vehicle window glass according to claim 1, wherein the plurality of heating wires are tungsten wires or copper wires.

17. The vehicle window glass according to claim 1, wherein the plurality of heating wires are printed silver paste wires.

18. A vehicle, comprising a vehicle body, an optical sensor assembly, and the vehicle window glass according to any one of claims 1 to 17, wherein an accommodation space is defined in the vehicle body, the vehicle window glass is mounted on the vehicle body, and the optical sensor assembly is disposed in the accommodation space and corresponds to the information acquisition region.

19. The vehicle according to claim 18, wherein an installation angle *θ* of the vehicle window glass ranges from 20° to 30°, the optical sensor assembly comprises a LiDAR, and a probability of detection (POD) of the LiDAR is greater than or equal to 90%.

20. The vehicle according to claim 19, wherein light transmitted by the LiDAR has a wavelength of 905nm, 940nm, or 1550nm.
